Europäisches Patentamt

European Patent Office

Office européen des brevets

(19)

(11) **EP 0 786 097 B1**

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(21) Anmeldenummer: **95933410.3**

(22) Anmeldetag: **21.09.1995**

(51) Int Cl.⁶: **G01S 17/10**

(86) Internationale Anmeldenummer:
**PCT/EP95/03712**

(87) Internationale Veröffentlichungsnummer:
**WO 96/12203 (25.04.1996 Gazette 1996/18)**

(54) **VERFAHREN UND VORRICHTUNG ZUR ELEKTROOPTISCHEN ENTFERNUNGSMESSUNG**

PROCESS AND DEVICE FOR THE ELECTRO-OPTICAL MEASUREMENT OF DISTANCE

PROCEDE ET DISPOSITIF DE MESURE ELECTRO-OPTIQUE DE DISTANCE

(84) Benannte Vertragsstaaten:
**CH DE FR GB LI SE**

(30) Priorität: **13.10.1994 DE 4436447**

(43) Veröffentlichungstag der Anmeldung:
**30.07.1997 Patentblatt 1997/31**

(73) Patentinhaber: **Leica AG**
**9435 Heerbrugg (CH)**

(72) Erfinder: **GÄCHTER, Bernhard**
**CH-9436 Balgach (CH)**

(74) Vertreter: **Stamer, Harald, Dipl.-Phys.**
**c/o Leica Industrieverwaltung GmbH,**
**Konzernstelle Patente + Marken,**
**Postfach 20 20**
**35530 Wetzlar (DE)**

(56) Entgegenhaltungen:
**EP-A- 0 437 417          WO-A-88/05922**
**DE-A- 4 031 668**

**Beschreibung**

Die Erfindungs betrifft ein Verfahren zur elektrooptischen Entfernungsmessung nach dem Oberbegriff des Patentanspruchs 1. Weiterhin betrifft die Erfindung eine Vorrichtung zur Durchführung des Verfahrens gemäß Patentanspruch 8.

Aus der EP 0 312 524 B1 bzw. der korrespondierenden WO 88/05922 ist ein Verfahren zur elektrooptischen Entfernungsmessung nach der Impulslaufzeitmethode bekannt, bei dem einzelne Strahlungsimpulse periodisch von einem Sender ausgesendet und von einem Empfänger detektiert werden. Die detektierten Strahlungsimpulssignale (Echosignale) werden abgetastet, digitalisiert, periodenweise in einem Addierer aufaddiert und dann in einem Speicher abgespeichert. Den Abtastwerten einer Periode wird jeweils ein Speicherplatz des Speichers zugeordnet. Mit Beginn jeder Aussendung eines Strahlungsimpulssignals werden die Abtastwerte der detektierten Strahlungimpulssignale zu den bereits abgespeicherten Abtastwerten der in der vorherigen Periode detektierten Strahlungsimpulssignale hinzuaddiert. Mit zunehmender Anzahl der Messungen bildet sich infolge der Aufaddierung der Abtastwerte ein Summenimpulssignal heraus, aus dessen zeitlicher Lage im Verhältnis zu dem Zeitpunkt der Impulsaussendung sich die Laufzeit des Strahlungsimpulssignals bestimmen läßt. Nachteilig an diesem Verfahren ist, daß eine hohe Abtastrate notwendig ist, um die genaue Lage des Echosignals zu ermitteln. Da die Abtastrate aus technischen Gründen begrenzt ist und darüber hinaus ein höhere Abtastrate einen größeren Speicher erforderte, steht nur eine bestimmte Anzahl von Abtastwerten je Impulssignal zur Auswertung zur Verfügung. Hierdurch können bei der Bestimmung der zeitlichen Lage des detektierten Impulssignals Fehler auftreten, insbesondere dann, wenn die Form des Impulssignals durch äußere Einflüsse verändert wird.

Weiterhin ist aus der DE 40 31 668 A1 ein Verfahren zur gleichzeitigen elektrooptischen Entfernungsmessung zu mehreren Meßobjekten, z.B. zu Fehlstellen in Glasfasern vom Ende der Glasfaser aus, bekannt. Dabei wird periodisch eine Folge von einzelnen Lichtimpulsen ausgesendet. Das als Impulsfolge ausgesendete Signal ist ein bandbreitegespreiztes Signal, so daß die Dauer des ausgesendeten Signals wesentlich größer ist als die reziproke spektrale Bandbreite desselben. Nachdem eine Impulsfolge ausgesendet worden ist, wird die nächste Impulsfolge ausgesendet, wobei die detektierten Lichtsignale mit der Periode der Impulsfolge aufaddiert und gespeichert werden. Zur Bestimmung der Laufzeit müssen die ausgesendeten Impulsfolgen an mindestens zwei Meßobjekten reflektiert werden. Ein Korrelationsverfahren wird nicht eingesetzt und wäre wegen der gegenseitigen Überlagerung der Korrelationshauptmaxima und Korrelationsnebenmaxima aufgrund der Reflexion an mehreren Meßobjekten auch nicht durchführbar. Durch Anwendung eines Maximum-Likelihood-Algorithmus werden die beiden Laufzeiten der Impulsfolgen approximiert, so daß nach Ermittlung der Laufzeitdifferenz die Entfernung bestimmt werden kann. Nachteilig an diesem bekannten Verfahren ist, daß Sender, insbesondere Puls-Laserdioden, mit ca. 1000-fach höherer Spitzenleistung und vergleichbar durchschnittlicher Leistung zu CW-Laserdioden nicht verwendet werden können. Da bei Puls-Laserdioden eine vergleichsweise große Zeitspanne gewartet werden muß, bis der nächste Impuls ausgesendet werden kann, ist die Aussendung eines bandbreitegespreizten Signals nicht möglich.

Der Erfindung liegt das technische Problem zugrunde, ein Verfahren und eine Vorrichtung zur Durchführung des Verfahrens anzugeben, so daß die Genauigkeit der Bestimmung der zeitlichen Lage des detektierten Impulssignals erhöht wird.

Dieses Problem wird durch die in dem Patentanspruch 1 und Patentanspruch 8 aufgeführten Merkmale gelöst.

Die einzelnen Strahlungsimpulssignale werden jeweils um ein Verschiebungsintervall versetzt zu dem Beginn eines konstanten Impulsaussende-Intervalls ausgesendet. Das Impulsaussende-Intervall wird bestimmt durch die Impulsrepetitionszeit des Senders. Die Länge des Verschiebungsintervalls wird so gewählt, daß nach Aussendung einer bestimmten Anzahl von Einzelimpulssignalen eine gleiche Anzahl von jeweils um das entsprechende Verschiebungsintervall verschobenen Echosignalen, auf einer gedachten Zeitachse nebeneinanderliegend, gespeichert wird. Diese zeitlich versetzt abgespeicherten Echosignale stellen ein Impulsmuster dar, welches durch vorherige Wahl der Länge der Verschiebungsintervalle aufgeprägt werden kann. Nachdem ein aus einer gewünschten Anzahl von Echosignalen bestehendes Impulsmuster gebildet worden ist, wird die Messung wiederholt, so daß die Echosignale in der darauffolgenden Messung zu den bereits gespeicherten Echosignalen aufaddiert werden. Diese Messungen werden so lange wiederholt, bis sich die Echosignale von den Rauschsignalen in ausreichendem Maße abheben. Durch Vergleich mit einem vorgegebenen Referenzmuster kann die Laufzeit dann unter Anwendung geeigneter Rechenmethoden bestimmt werden.

Mit der Erfindung wird die Genauigkeit der Messung erhöht. Dadurch, daß die Dauer zwischen der Aussendung benachbarter Strahlungsimpulssignale mindestens einem Impulsaussende-Intervall entspricht, können die einzelnen Strahlungsimpulssignale eine hohe Spitzenleistung aufweisen. Nach Detektion der Echosignale liegt ein Impulsmuster vor, aus dessen zeitlicher Lage zu einem Referenzmuster die Laufzeit genau bestimmt werden kann. Der Erfindung liegt die Erkenntnis zugrunde, daß die Genauigkeit der Messung einerseits mit der Spitzenleistung des Senders (10 W) und andererseits nur mit $\sqrt{M}$ der Anzahl der detektierten Impulse steigt. Die lange Erholungszeit der Impulslaserdiode von 100 µs liefert Repetitionsraten von max. 10 kHz, aber aufgrund der Augensicherheitsvorschriften muß wegen der hohen Pulsleistung bei einer Pulsbreite von 50 ns die Repetitionsrate auf 5 kHz beschränkt bleiben. Hingegen sind bei der DE 4 031 668 A1 mit einem CW-Laser von maximal 5 mW-Laserleistung und bei 50 ns Pulsbreite gemäß der Augensicherheitsvorschriften maximale Repetitionsraten von $10^7$ Hz möglich. Im Vergleich ergibt sich aber ein um den Faktor 45 besseres Signal/Rausch-Verhältnis für das erfindungsgemäße Verfahren $((10\,W * \sqrt{5\,kHz})/(5\,mW * \sqrt{10^7\ Hz}) = 45)$. Somit steht entweder ein Meßergebnis mit höherer Genauigkeit innerhalb des gleichen Meßzeitraums oder gleicher Genauigkeit in einem kürzeren Meßzeitraum zur Verfügung.

Nach einer Weiterbildung der Erfindung wird das detektierte Echo-Impulsmuster durch zeitlich verzögerte Aussendung der einzelnen Strahlungsimpulssignale erzeugt. Bezugspunkt für die zeitliche Verzögerung um jeweils ein Verschiebungsintervall bildet der Beginn eines Impulsaussende-Intervalls. Vorzugsweise weisen die Verschiebungsintervalle unterschiedliche Länge auf, wobei die Länge nach einem Zufallsmuster gebildet wird, so daß das detektierte Echomuster gleichermaßen zufallsverteilt ist.

Bildet das Impulsmuster eine m-Sequenz, so ist die Meßgenauigkeit besonders hoch, denn für m-Sequenzen ist eine Autokorrelation möglich. Diese ergibt eine Delta-Funktion und unerwünschte Korrelationsnebenmaxima kommen nicht vor.

Für die rechnerische Auswertung des Echomusters können mehrere bekannte Rechenmethoden angewendet werden. Zum einen kann das Echosignal mit einem Referenzimpulssignal korreliert werden. Zum anderen kann mit Hilfe geeigneter Schätzmethoden, wie z.B. der minimalen Varianz oder nach dem Maximum-Liklihood-Prinzip, die zeitliche Lage des Echosignals ermittelt werden, um daraus die gesuchte Laufzeit zu berechnen.

Für die Anwendung des erfindungsgemäßen Verfahrens läßt sich vorteilhafterweise ein Impulslaser mit verhältnismäßig hoher Spitzenleistung einsetzen, beispielsweise mit einer Spitzenleistung von 5 bis 10 W. Hierdurch wird das Signal/Rausch-Verhältnis erhöht und zudem kann wegen der relativ großen Erholungszeit des Lasers ein großer Meßbereich abgedeckt werden. Dabei kann derjenige Zeitabschnitt des Meßbereichs, der je nach Anwendungsfall nicht relevant ist für die Messung, dazu genutzt werden, andere anfallende Rechenoperationen in dem Rechner durchführen zu lassen.

Nach einer Weiterbildung der Erfindung besteht der Empfänger aus einem CCD-Baustein. In diesem werden die Echosignale in einer Mehrzahl von CCD-Speichern zwischengespeichert und aufaddiert. Das Summensignal kann dann am Ende der Messung der Signalverarbeitungseinheit zur Auswertung zugeführt werden.

Vorteilhafterweise läßt sich der CCD-Baustein in Ein-Chip-Bauweise einsetzen. Die Speicherfähigkeit läßt sich beliebig erweitern, wobei durch das Vorsehen weiterer CCD-Bausteine zusätzlich Bildinformationen über das Meßobjekt gewonnen und weiterverarbeitet werden können.

Zwei Ausführungsbeispiele der Erfindung sind in der Zeichnung dargestellt und werden im folgenden näher beschrieben.

Es zeigen:

Fig. 1 ein Blockschaltbild eines bevorzugten Ausführungsbeispiels,

Fig. 2 ein Zeitdiagramm mit jeweils in einem Meßintervall ausgesendeten Strahlungsimpulssignalen und mit einem aus zeitlich versetzten Echoimpulssignalen bestehenden Summensignal,

Fig. 3 ein Blockschaltbild eines weiteren Ausführungsbeispiels.

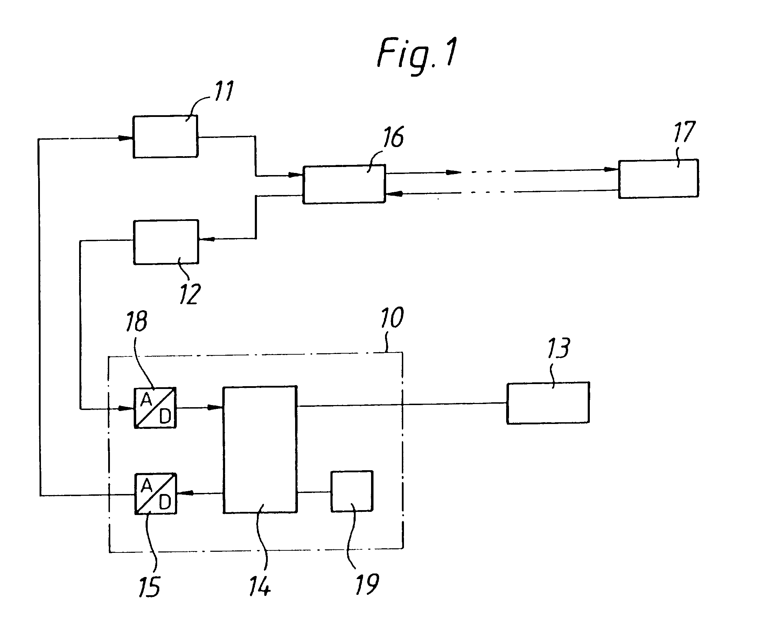

Nach einem bevorzugten Ausführungsbeipiel gemäß Fig. 1 besteht die Vorrichtung zur Entfernungsmessung aus einer Signalverarbeitungseinheit 10, die mit einem Sender 11, einem Empfänger 12 und einer Anzeige 13 elektrisch gekoppelt ist. Die Signalverarbeitungseinheit 10 weist einen Signalprozessor 14 auf, der zu Beginn einer Entfernungsmessung ein Startsignal über einen Digital/Analog -Wandler 15 an den Sender 11 abgibt. Der Sender 11 besteht aus einem Laser, der einzelne Strahlungsimpulssignale hoher Leistung aussendet. Vorzugsweise liegt die Spitzenleistung des Lasers bei 5 bis 10 Watt.

Die vom Sender 11 ausgesendeten Strahlungsimpulssignale verlassen über ein Linsensystem 16 die Vorrichtung und treffen auf ein Meßobjekt 17, an dem sie reflektiert werden und nachfolgend von dem Empfänger 12 erfaßt werden. Die in dem Empfänger 12 detektierten Strahlungsimpulssignale werden als Echosignale einem Analog/Digital-Wandler 18 der Signalverarbeitungseinheit 10 zugeführt und nachfolgend in dem Signalprozessor 14 weiterverarbeitet. Ein Speicher 19 dient zur Abspeicherung der Meßergebnisse eines Meßintervalls. Dabei werden die Echosignale mit einer Abtastrate von ca. 40 MHz abgetastet. Die hieraus innerhalb eines Meßintervalls gewonnenen Abtastwerte der Echosignale werden jeweils einem Speicherplatz in dem Speicher 19 zugeordnet. Das berechnete Meßergebnis wird dann in einer Anzeige 13 angezeigt.

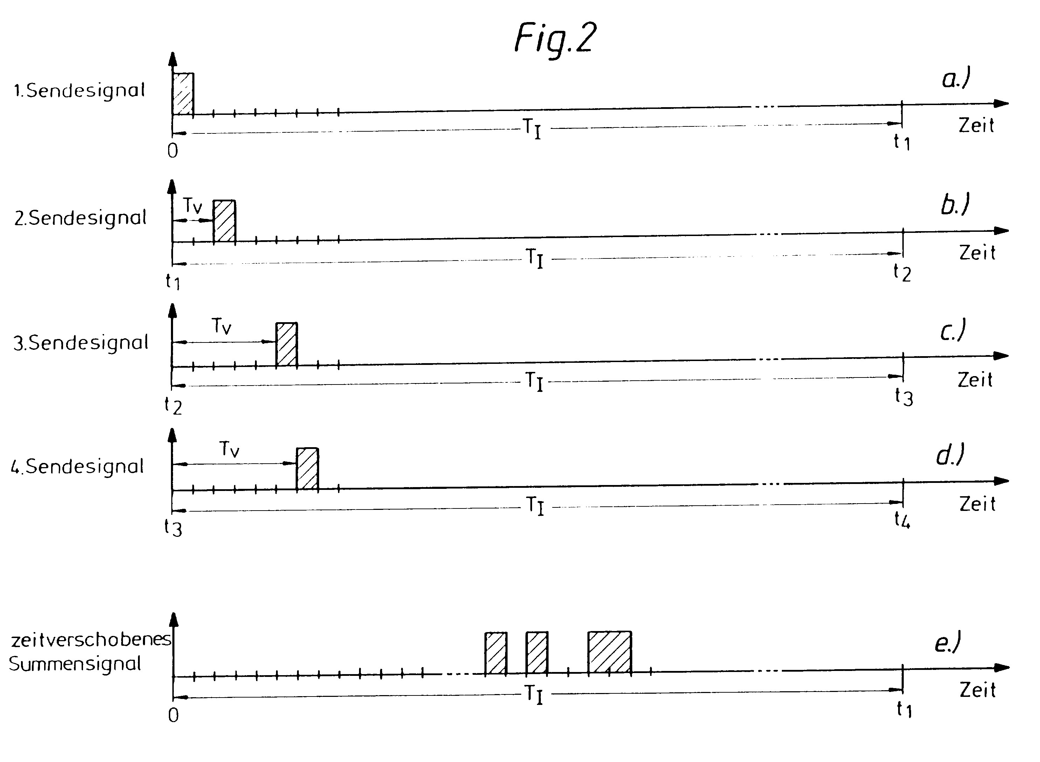

Das Verfahren der Entferungsmessung wird nachfolgend anhand der Fig. 2 beschrieben. Die Aussendung der einzelnen Strahlungsimpulssignale mittels des Senders 11 wird durch den Signalprozessor 14 gesteuert. Um das Signal/Rausch-Verhältnis zu vergrößem, werden nacheinander eine Vielzahl von Strahlungsimpulssignalen ausgesendet, wobei die detektierten Strahlungsimpulssignale aufaddiert werden und in dem Speicher 19 abgespeichert werden. Die Impulssignale werden als Einzelimpulssignale jeweils innerhalb eines Impulsaussende-Intervalls $T_I$ ausgesendet. Die Dauer des Impulsaussende-Intervalls $T_I$ entspricht der Repititionszeit des Senders 11. Das Meßintervall wird durch den vorbestimmten Meßbereich festgelegt. Um beispielsweise einen Meßbereich von 3000 Metern zu erhalten, entspricht das Meßintervall einem Viertel der Dauer des Impulsaussende-Intervalls $T_I$ bei einer Repititionszeit des Lasers von ca. 100 µs. Die Aussendung der einzelnen Impulssignale wird durch den Signalprozessor 14 in der Art gesteuert, daß die Strahlungsimpulssignale nicht periodisch ausgesendet werden, sondern zeitlich versetzt zur Periode des Impulsaussende-Intervalls $T_I$. Erfolgt, wie in Fig. 2a dargestellt, die Aussendung eines ersten Sendeimpulssignals zu Beginn eines Impulsaussende-Intervalls $T_I$, so wird das darauffolgende zweite Sendeimpulssignal um ein Verschiebungsintervall $T_V$ zeitlich versetzt zum Beginn des zweiten Impulsaussende-Intervalls $T_I$, nämlich zum Zeitpunkt $t_1$, ausgesendet. Die zeitliche Verschiebung der Sendeimpulssignale setzt sich mit jedem weiteren Impulsaussende-Intervall $T_I$ fort, wobei die detektierten Signale eines Impulsaussende-Intervalls $T_I$ zu den in dem Speicher 19 abgespeicherten detektierten Signalen des vorhergehenden Impulsaussende-Intervall $T_I$ aufaddiert werden.

Dadurch, daß die Dauer des Verschiebungsintervalls $T_V$ größer als die Strahlungsimpulsdauer ist, wird verhindert, daß sich die Echosignale benachbarter Meßintervalle überlagern. Wie aus Fig. 2e) zu ersehen, wird nach Ablauf von vier Meßintervallen in dem Speicher 19 ein Echoimpulsmuster abgespeichert, wobei der Abstand der Echosignale von der Größe der Verschiebungsintervalle $T_V$ abhängen. Alternativ kann das Verschiebungsintervall $T_V$ auch konstant gewählt werden. Es ergibt sich dann eine Summenimpulsfolge mit äquidistanten Impulsintervallen.

Zur Erlangung eines resultierenden Impulsmusters führt der Signalprozessor 14 dem Sender 11 Startsignale zu, dessen zeitliche Abfolge programmierbar ist, während die empfangenen Echosignale fortlaufend durch den A/D-Wandler 18 dem Signalprozessor 14 zur Verfügung stehen. Das zwischen dem Beginn zweier ausgesendeter Strahlungsimpulssignale entstehende Zeitintervall setzt sich aus der Dauer des Impulsaussende-Intervalls $T_I$ und des Verschiebungintervalls Tv zusammen. Wie in Fig. 2e) gezeigt, ergibt sich nach Aussendung von vier Strahlungsimpulssignalen eine Impulsfolge, die ein bandbreitegespreiztes Signal darstellt, dessen Länge der Dauer von sieben Strahlungsimpulsen entspricht. Die Länge der resultierenden Impulssequenz kann beliebig verlängert werden. Nachdem eine zur Bildung einer gewünschten Impulsfolge entsprechende Anzahl von Strahlungsimpulssignalen ausgesendet worden ist - gem. Fig. 2 sind vier Strahlungsimpulssignale ausgesendet worden - , beginnt die von dem Signalprozessor 14 gesteuerte zeitliche Abfolge der Aussendung von vome. Diese zeitliche Abfolge der Aussendung wird sooft wiederholt, bis ein ausreichendes Signal/Rausch-Verhältnis gewährleistet ist.

Alternativ kann die Steuerung zur Bildung der gewünschten Impulsfolge derart ausgebildet sein, daß die Strahlungsimpulssignale vom Sender 11 periodisch mit dem Beginn des Impulsaussende-Intervalls $T_I$ ausgesendet werden, während die Abtastung der Echosignale im A/D-Wandler 18 bereits um ein Verschiebungsintervall vorher beginnt. Dies kann durch programmgesteuertes Einlesen in einem Register des Signalprozessors 14 erreicht werden. In diesem Fall wird somit bei der Abtastung der Echosignale das gewünschte Impulsmuster erzeugt.

Zur Laufzeitbestimmung, aus der sich die Entfernung errechnen läßt, wird die resultierende Impulsfolge mit einer Referenzimpulsfolge verglichen. Vorzugsweise wird die Referenzimpulsfolge durch eine Eichmessung bestimmt, wobei der Abstand des Referenz-Meßobjekts zum Meßgerät annähernd Null ist. Nach bekannten mathematischen Schätzverfahren, beispielsweise unter Anwendung des aus der DE 40 31 668 A1 bekannten Maximum-Likelihood-Schätzalgorithmus oder der Methode der minimalen Varianz, kann nachfolgend die Laufzeit bestimmt werden. Alternativ kann die Laufzeit durch Korrelation der resultierenden Impulsfolge mit der Referenz-Impulsfolge bestimmt werden.

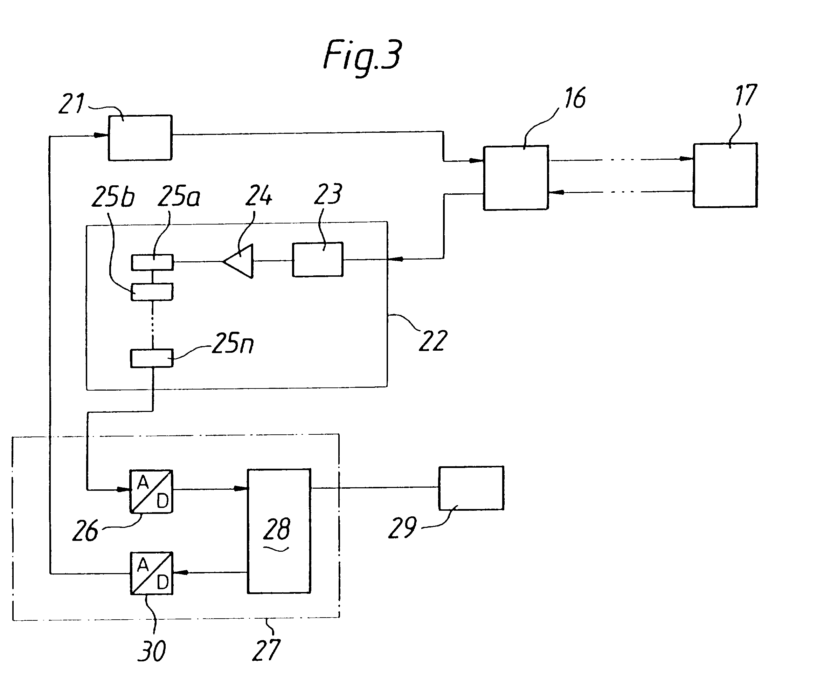

Nach einem weiteren Ausführungsbeispiel gemäß Fig.3 besteht die Vorrichtung zur Entfernungsmessung aus einem analogen Empfänger, der in CCD-Technik aufgebaut ist. Der Empfänger besteht aus einem CCD-Baustein 22, der aus einem Foto-Detektor 23, einem diesem nachgeschalteten Verstärker 24 und einer Folge von analogen CCD-Speichern 25 besteht. In jedem analogen CCD-Speicher 25 kann die Datenmenge eines Meßintervalls gespeichert werden. Die CCD-Speicher 25 sind in einer Reihe angeordnet, wobei die benachbarten CCD-Speicher 25 mit einer der Anzahl der Daten je Meßintervall entsprechenden Zahl von Transfer-Gates zur Übertragung derselben verbunden sind. Nachdem die Daten des ersten gemessenen Meßintervalls in den Speicher 25a eingelesen worden sind, werden diese Daten während eines Auslesetaktes über die Transfer-Gates zu dem benachbarten CCD-Speicher 25b übertragen und dort gespeichert. Nach Ablauf eines weiteren Meßintervalls werden diese Daten von dem CCD-Speicher 25b dem weiteren benachbarten CCD-Speicher übertragen. Nach einer bestimmten Anzahl von Meßintervallen werden die Daten in den Speicher 25n übertragen und in nachfolgenden Auslesetakten die jeweils nachfolgenden Daten im CCD-Speicher 25n hinzuaddiert. Nach einer ausreichenden Anzahl von ausgesendeten Strahlungsimpulssignalen werden die detektierten Echosignale von dem CCD-Speicher 25n in einen A/D-Wandler 26 einer Signalverarbeitungseinheit 27 ausgelesen und in digitale Signale umgesetzt. Ein in der Signalverarbeitungseinheit 27 angeordneter Signalprozessor 28 dient in gleicher Weise wie im oben beschriebenen Ausführungsbeispiel einerseits zur Steue-

rung der ausgesendeten Strahlungsimpulssignale bzw. der empfangenen Echosignale und andererseits zur Ermittlung der Laufzeit mittels eines mathematischen Schätzverfahrens. Das gewonnene Meßergebnis kann nachfolgend in einer Anzeige 29 angezeigt werden. Über einen D/A-Wandler 30 wird das Startsignal des Signalprozessors 28 dem Sender 21 zugeführt. Die Steuerung der Aussendung der Strahlenimpulssignale erfolgt in gleicher Weise wie nach dem ersten Ausführungsbeispiel.

## Patentansprüche

1. Verfahren zur elektrooptischen Entfernungsmessung nach der Impulslaufzeitmethode, wobei

   a) Strahlungsimpulssignale jeweils innerhalb eines periodischen Impulsaussende-Intervalls $(T_I)$ von einem Sender (11;21) ausgesendet werden,

   b) die an mindestens einem Meßobjekt (17) reflektierten Strahlungsimpulssignale als Echosignale in einem Empfänger (12;22) detektiert und einer Signalverarbeitungseinheit (10;27) zugeführt werden, in der die Echosignale abgetastet und in einem Speicher (19;25) abgespeichert werden,

   c) die Echosignale zu den in den vorherigen Impulsaussende-Intervallen $(T_I)$ detektierten Echosignalen aufaddiert und nachfolgend als Summenimpulssignale abgespeichert werden,

   **dadurch gekennzeichnet,**

   d) daß als Sender (11;21) ein Impulslaser mit hoher Spitzenleistung verwendet wird, der innerhalb eines jeden Impulsaussende-Intervalls $(T_I)$ jeweils ein einzelnes Strahlungsimpulssignal emittiert, wobei die Strahlungsimpulssignale in aufeinanderfolgenden Impulsaussende-Intervallen $(T_I)$ zeitlich verschoben um ein Verschiebungsintervall $(T_V)$ unterschiedlicher Dauer gegenüber dem Periodenbeginn des Impulsaussende-Intervalls $(T_I)$ vom Sender (11; 21) ausgesendet werden oder wobei jedes detektierte Strahlungsimpulssignal gegenüber dem Periodenbeginn des Impulsaussende-Intervalls $(T_I)$ zeitlich verschoben um ein Verschiebungsintervall $(T_V)$ unterschiedlicher Dauer von der Signalverarbeitungseinheit (10; 27) abgetastet wird, so daß nach Ablauf von N Impulsaussende-Intervallen $(T_I)$ ein aus N Strahlungsimpulssignalen bestehendes Impulsmuster entsteht,

   e) daß die Dauer des Verschiebungsintervalls $(T_V)$ mindestens der Strahlungsimpulsdauer entspricht und kleiner ist als das Impulsaussende-Intervall $(T_I)$,

   f) daß aus der zeitlichen Lage des Impulsmusters nach bekannten Schätzalgorithmen die Entfernung berechnet wird.

2. Verfahren nach Anspruch 1, **dadurch gekennzeichnet,** daß das Impulsmuster eine pseudostochastische Folge darstellt, aus der durch Anwendung eines Schätzalgorithmus nach der maximum-likelihood-Methode oder nach der Methode der minimalen Varianz die Entfernung berechnet wird.

3. Verfahren nach Anspruch 1 oder 2, **dadurch gekennzeichnet**, daß die Dauer der Verschiebungsintervalle $(T_V)$ jeweils einem ganzzahligen Vielfachen der Strahlungsimpulsdauer entspricht.

4. Verfahren nach einem der Ansprüche 1 bis 3, **dadurch gekennzeichnet**, daß das Impulsmuster eine m-Sequenz bildet.

5. Verfahren nach einem der Ansprüche 1 bis 4, **dadurch gekennzeichnet**, daß die Folge der gespeicherten Summenimpulssignale mit einer vorgegebenen Referenzfolge von Impulssignalen korreliert wird, so daß der hieraus gewonnene Schätzwert ein Maß für die Entfernung darstellt.

6. Verfahren nach Anspruch 1, **dadurch gekennzeichnet,** daß die Differenz aufeinanderfolgender Verschiebungsintervalle $(T_V)$ konstant ist und einem ganzzahligen Vielfachen der Strahlungsimpulsdauer entspricht.

7. Verfahren nach einem der vorher genannten Ansprüche, **dadurch gekennzeichnet,** daß das Impulsmuster mehrfach wiederholt und aufaddiert wird.

8. Vorrichtung zur Durchführung des Verfahrens nach Anspruch 1 mit

   a) einem Sender (11;21), der Strahlungsimpulssignale jeweils innerhalb eines periodischen Impulsaussende-Intervalls $(T_I)$ emittiert,

   b) einem Empfänger (12;22), der die an mindestens einem Meßobjekt (17) reflektierten Strahlungsimpulssignale als Echosignale detektiert,

   c) einer Signalverarbeitungseinheit (10;27) zur Steuerung der Strahlungsimpulssignale sowie zur Abtastung und Auswertung der Echosignale,

d) einem Speicher (19;25) zum Abspeichern der Echosignale und

e) einem der Signalverarbeitungseinheit (10; 27) zugeordneten Signalprozessor (14;28), der die Echosignale zu den jeweils vorher detektierten Echosignalen aufaddiert und nachfolgend als Summenimpulssignal abspeichert,

**dadurch gekennzeichnet, daß**

f) der Sender (11;21) ein Impulslaser mit hoher Spitzenleistung ist, der innerhalb eines jeden Impulsaussende-Intervalls ($T_I$) jeweils ein einzelnes Strahlungsimpulssignal emittiert,

g) die Signalverarbeitungseinheit (10;27)

- den Sender (11;21) so steuert, daß die Strahlungsimpulssignale in aufeinanderfolgenden Impulsaussende-Intervallen ($T_I$) zeitlich verschoben um ein Verschiebungsintervall ($T_V$) unterschiedlicher Dauer gegenüber dem Periodenbeginn des Impulsaussende-Intervalls ($T_I$) vom Sender (11; 21) ausgesendet werden, oder
- den Empfänger (12;22) so steuert, daß jedes detektierte Strahlungsimpulssignal gegenüber dem Periodenbeginn des Impulsaussende-Intervalls ($T_I$) zeitlich verschoben um ein Verschiebungsintervall ($T_V$) unterschiedlicher Dauer abgetastet wird,

h) im Zusammenwirken mit dem Signalprozessor (14;28) nach Ablauf von N Impulsaussende-Intervallen ($T_I$) im Speicher (19;25) ein aus N Strahlungsimpulssignalen bestehendes Impulsmuster entsteht und

i) in der Signalverarbeitungseinheit (10;27) aus der zeitlichen Lage des Impulsmusters nach bekannten Schätzalgorithmen die Entfernung berechnet wird.

9. Vorrichtung nach Anspruch 8, **dadurch gekennzeichnet,** daß der Empfänger (12;22) eine analoge Speichereinheit (25) aufweist, in der die Echosignale sequentiell eingelesen, zwischengespeichert und nachfolgend zu einem Summensignal aufaddiert werden.

10. Vorrichtung nach Anspruch 9, **dadurch gekennzeichnet,** daß der Empfänger aus mindestens einem CCD-Baustein (22) besteht, der einen Fotodetektor (23) zur Umsetzung des Echosignals in Signalladungen und mindestens zwei analoge Speicher (25a,25b) zur Speicherung der Signalladungen enthält, wobei in jedem analogen Speicher (25a, 25b) der Datensatz eines Meßintervalls abgespeichert ist.

11. Vorrichtung nach Anspruch 9 oder 10, **dadurch gekennzeichnet**, daß die analogen Speicher (25a, 25b,... 25n) jeweils als CCD-Bereiche ausgebildet sind und durch Transfer-Gates sequentiell miteinander verbunden sind so daß die gespeicherten Signalladungen auf einen jeweils benachbarten CCD-Bereich übertragen werden können.

## Claims

1. Method for the electro-optical distance measurement by the pulse transit time method, wherein

a) radiation pulse signals are emitted by a transmitter (11;21) each time within a periodic pulse emission interval ($T_I$),

b) the radiation pulse signals reflected at at least one measurement object (17) are detected in a receiver (12;22) and fed to a signal-processing unit (10;27), in which the echo signals are scanned and stored in a storage device (19;25),

c) the echo signals are added to the echo signals detected in the previous pulse emission intervals ($T_I$) and stored subsequently as pulse sum signals,

characterised thereby,

d) that a pulse laser with high peak power is used as transmitter (11;21), which emits a single radiation pulse signal each time within each pulse emission interval ($T_I$), wherein the radiation pulse signals in successive pulse emission intervals ($T_I$) and emitted by the transmitter (11; 21) are displaced in time relative to the beginning of the period of the pulse emission interval ($T_I$) by a displacement interval ($T_V$) of different duration or wherein each detected radiation pulse signal is scanned by the signal processing unit (10;27) displaced in time relative to the beginning of the period of the pulse emission interval ($T_I$) by a displacement interval ($T_V$) of different duration so that a pulse pattern consisting of N radiation pulse signals arises after the completion of N pulse emission intervals ($T_I$),

e) that the duration of the displacement interval ($T_V$) corresponds to at least the radiation pulse duration and is less than the pulse emission interval ($T_I$) and

f) that the distance is computed according to known estimating algorithms from the time position of the pulse pattern.

2. Method according to claim 1, characterised thereby, that the pulse pattern represents a pseudo-stochastic sequence, from which the distance is computed by application of an estimating algorithm according to the method of maximum likelihood or according to the method of minimum variance.

3. Method according to claim 1 or 2, characterised thereby, that the duration of the displacement intervals ($T_V$) each time corresponds to an integral multiple of the radiation pulse duration.

4. Method according to one of the claims 1 to 3, characterised thereby, that the pulse pattern forms an m-sequence.

5. Method according to one of the claims 1 to 4, characterised thereby, that the sequence of the stored pulse sum signals is correlated with a preset reference sequence of pulse signals so that the estimated value obtained herefrom represents a measurement for the distance.

6. Method according to claim 1, characterised thereby, that the difference between successive displacement intervals ($T_V$) is constant and corresponds to an integral multiple of the radiation pulse duration.

7. Method according to one of the previously mentioned claims, characterised thereby, that the pulse pattern is repeated several times and added up.

8. Device for the performance of the method according to claim 1 with

a) a transmitter (11;21), which emits radiation pulse signals each time within a periodic pulse emission interval ($T_I$),

b) a receiver (12;22), which detects the radiation pulse signals reflected at at least one measurement object (17) as echo signals,

c) a signal processing unit (10;27) for the control of the radiation pulse signals as well as for the scanning and evaluation of the echo signals,

d) a storage device (19; 25) for the storage of the echo signals and

e) a signal processor (14;28), which is associated with the signal-processing unit (10;27) and which adds the echo signals to the echo signals detected previously each time and subsequently stores them as pulse sum signal,

characterised thereby, that

f) the transmitter (11;21) is a pulse laser with high peak power, which emits a single radiation pulse signal each time within each pulse emission interval ($T_I$),

g) the signal-processing unit (10;27) so controls the transmitter (11;21) that the radiation pulse signals in successive pulse emission intervals ($T_I$) and emitted by the transmitter (11; 21) are displaced in time relative to the beginning of the period of the pulse emission interval ($T_I$) by a displacement interval ($T_V$) of different duration or so controls the receiver (12;22) that each detected radiation pulse signal is scanned displaced in time relative to the beginning of the period of the pulse emission interval ($T_I$) by a displacement interval ($T_V$) of different duration,

h) a pulse pattern consisting of N radiation pulse signals arises in the storage device (19; 25) in co-operation with the signal processor (14;28) after the completion of N pulse mission intervals ($T_I$) and

i) the distance is computed in the signal-processing unit (10;27) according to known estimating algorithms from the time position of the pulse pattern.

9. Device according to claim 8, characterised thereby, that the receiver (12; 22) comprises an analog storage unit (28), into which the echo signals are read serially and in which the echo signals are intermediately stored and subsequently added up into a sum signal.

10. Device according to claim 9, characterised thereby, that the receiver consists of at least one charge-coupled device block (22), which contains a photodetector (23) for the conversion of the echo signal into signal charges and at least two analog storage devices (25a, 25b) for the storage of the signal charges, wherein the data set of a measurement interval is stored in each analog storage device (25a, 25b).

11. Device according to claim 10, characterised thereby, that the analog storage devices (25a to 25n) are each formed as respective charge-coupled device regions and connected one with the other sequentially by transfer gates so that the stored signal charges can be transferred to a respectively adjacent charge-coupled device region.

## Revendications

1. Procédé pour la mesure électro-optique de la distance selon la méthode de durée de parcours d'un impulsions, où

   a) des signaux impulsionnnels de rayonnement sont émis à chaque fois pendant un intervalle périodique d'émission d'impulsions $(T_1)$ par un émetteur (11 ; 21)
   b) les signaux impulsionnels de rayonnement réfléchis sur au moins un objet de mesure (17) sont détectés, en tant que signaux d'écho, dans un récepteur (12 ; 22) et sont conduits à une unité de traitement de signaux (10 ; 27) dans laquelle les signaux d'écho sont analysés et sont mémorisés dans une mémoire (19 ; 25)
   c) les signaux d'écho sont additionnés aux signaux d'écho détectés pendant les intervalles d'émission d'impulsions $(T_1)$ précédents et sont subséquemment mémorisés en tant que signaux impulsionnels de somme,

   **caractérisé**

   d) en ce qu'en tant qu'émetteur (11 ; 21), on utilise un laser pulsé avec une forte puissance de pointe, qui émet, à l'intérieur de chaque intervalle d'émission d'impulsions $(T_1)$, un seul signal impulsionnel de rayonnement et les signaux impulsionnels de rayonnement sont émis pendant des intervalles d'émission d'impulsions $(T_1)$ se suivant, déphasés dans le temps d'un intervalle de déphasage $(T_V)$ d'une durée différente par rapport au début de la période de l'intervalle d'émission d'impulsions $(T_1)$ par l'émetteur (11 ; 21) ou bien chaque signal impulsionnel de rayonnement détecté déphasé dans le temps, vis-à-vis du début de la période de l'intervalle d'émission d'impulsions $(T_1)$, d'un intervalle de déphasage $(T_V)$ d'une durée différente est analysé par l'unité de traitement de signaux (10 ; 27) donc après écoulement de n intervalles d'émission d'impulsions $(T_1)$, il en résulte un modèle d'impulsions se composant de n signaux impulsionnels de rayonnement,
   e) en ce que la durée de l'intervalle de déphasage $(T_V)$ correspond au moins à la durée d'une impulsion de rayonnement et est plus petite que l'intervalle d'émission d'impulsions $(T_1)$,
   f) en ce que de la position temporelle du modèle d'impulsions, on calcule la distance à partir d'algorithmes connus d'évaluation.

2. Procédé selon la revendication 1, **caractérisé en ce que** le modèle d'impulsions représente une suite pseudostochastique à partir de laquelle, par l'utilisation d'un algorithmme de l'évaluation selon la méthode de probabilité maximale ou selon la méthode de variance maximale, on calcule la distance.

3. Procédé selon la revendication 1 ou 2, **caractérisé en ce que** la durée de l'intervalle de déphasage $(T_V)$ correspond à chaque fois à un multiple entier de la durée de l'impulsion de rayonnement.

4. Procédé selon l'une des revendications 1 à 3, **caractérisé en ce que** le modèle impulsionnel forme une séquence m.

5. Procédé selon l'une des revendications 1 à 4, **caractérisé en ce que** la suite des signaux impulsionnels mémorisée de somme est mise en corrélation avec la suite de référence prédéterminée de signaux impulsionnels de manière que la valeur d'évaluation qui en est obtenue représente une mesure pour la distance.

6. Procédé selon la revendication 1, **caractérisé en ce que** la différence d'intervalles de déphasage $(T_V)$ se suivant est constante et correspond à un multiple entier de la durée de l'impulsion de rayonnement.

7. Procédé selon l'une des revendications précédentes, **caractérisé en ce que** le modèle d'impulsions est plusieurs fois répété et additionné.

8. Dispositif pour la mise en oeuvre du procédé selon la revendication 1, avec

   a) un émetteur (11 ; 21) qui émet des signaux impulsionnels de rayonnement pendant un intervalle périodique d'émission d'impulsions $(T_1)$ ;
   b) un récepteur (12 : 22) qui détecte les signaux impulsionnels de rayonnement réfléchis sur au moins un objet de mesure (17) en tant que signaux d'écho ;
   c) une unité de traitement de signaux (10 ; 27) pour le réglage des signaux impulsionnels de rayonnement ainsi que pour l'analyse et l'évaluation des signaux d'écho ;
   d) une mémoire (19 ; 25) pour la mise en mémoire des signaux d'écho ;
   e) un processeur de signaux (14 ; 28) affecté à l'unité de traitement de signaux (10 ; 27) qui ajoute les signaux d'écho aux signaux d'écho à chaque fois déjà détectés et les mémorise subséquemment en tant que signal impulsionnel de somme,

**caractérisé en ce que**

f) l'émetteur (11 ; 21) est un laser pulsé avec une grande puissance de pointe, qui émet, à l'intérieur de chaque intervalle d'émission d'impulsions ($T_1$), à chaque fois, un signal impulsionnel de rayonnement unique ;
g) l'unité de traitement de signaux (10 ; 27)

- commande l'émetteur (11 ; 21) de manière que les signaux impulsionnels de rayonnement soient émis pendant des intervalles d'émission d'impulsions se suivant ($T_1$) déphasés dans le temps d'un intervalle de déphasage ($T_V$) de durée différente vis-à-vis du début de la période de l'intervalle d'émission d'impulsions ($T_1$) par l'émetteur (11 ; 21) ou
- commande le récepteur (12 ; 22) de manière que chaque signal impulsionnel de rayonnement détecté déphasé vis-à-vis du début de la période de l'intervalle d'émission d'impulsions ($T_1$), dans le temps, d'un intervalle de déphasage ($T_V$) de durée différente, soit analysé ;

h) en coopération avec le processeur de signaux (14 ; 28) après écoulement de N intervalles ($T_1$) d'émission d'impulsions, il en résulte dans la mémoire (19 ; 21), un modèle d'impulsions se composant de N signaux impulsionnels de rayonnement ; et
i) dans l'unité de traitement de signaux (10 ; 27), on calcule, à partir de la position temporelle du modèle d'impulsions, selon des algorithmes connus d'évaluation, la distance.

**9.** Dispositif selon la revendication 8, **caractérisé en ce que** le récepteur (12 ; 22) présente une unité de mémoire analogique (25) dans laquelle sont séquentiellement introduits les signaux d'écho, mémorisés de façon intermédiaire et subséquemment additionnés en un signal de somme.

**10.** Dispositif selon la revendication 9, **caractérisé en ce que** le récepteur se compose au moins d'un élément à CCD (22) qui contient un photodétecteur (23) pour la transformation du signal d'écho en charges de signal et au moins deux mémoires analogiques (25a, 25b) pour la mise en mémoire des charges de signal, dans chaque mémoire analogique (25a, 25b) étant mémorisé l'ensemble de données d'un intervalle de mesure.

**11.** Dispositif selon la revendication 9 ou 10, **caracté-**

**risé en ce que** les mémoires analogiques (25a, 25b ; ... 25n) sont à chaque fois considérées comme zones à CCD et sont reliées séquentiellement les unes aux autres par des portes de transfert de manière que les charges mémorisées de signaux puissent être transmises à une zone à CCD à chaque fois voisine.

## Fig.1

EP 0 786 097 B1

# Fig.2

1.Sendesignal    a.)

$T_I$    Zeit

0    $t_1$

2.Sendesignal    $T_V$    b.)

$T_I$    Zeit

$t_1$    $t_2$

3.Sendesignal    $T_V$    c.)

$T_I$    Zeit

$t_2$    $t_3$

4.Sendesignal    $T_V$    d.)

$T_I$    Zeit

$t_3$    $t_4$

zeitverschobenes Summensignal    e.)

$T_I$    Zeit

0    $t_1$

EP 0 786 097 B1

Fig.3